(19) Europäisches Patentamt / European Patent Office / Office européen des brevets

(11) **EP 1 848 756 B1**

(12) **FASCICULE DE BREVET EUROPEEN**

(45) Date de publication et mention
de la délivrance du brevet:
**15.04.2009 Bulletin 2009/16**

(21) Numéro de dépôt: **05824589.5**

(22) Date de dépôt: **06.12.2005**

(51) Int Cl.:
***C08G 77/20*** *(2006.01)*

(86) Numéro de dépôt international:
**PCT/FR2005/003045**

(87) Numéro de publication internationale:
**WO 2006/070085 (06.07.2006 Gazette 2006/27)**

(54) **COMPOSITION SILICONE NON JAUNISSANTE**

NICHT VERGILBENDE SILIKONZUSAMMENSETZUNG

NON-YELLOWING SILICONE COMPOSITION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2004 FR 0413808**

(43) Date de publication de la demande:
**31.10.2007 Bulletin 2007/44**

(73) Titulaire: **Bluestar Silicones France
69486 Lyon Cedex 03 (FR)**

(72) Inventeurs:
• **BLANC-MAGNARD, Delphine
F-69007 Lyon (FR)**
• **BARRANDON, Georges
F-69440 Mornant (FR)**
• **GEORGE, Catherine
F-69130 Ecully (FR)**

(56) Documents cités:
**EP-A- 0 509 515          EP-A- 0 732 373
US-A- 4 122 246          US-A- 4 123 604**

**Description**

Le domaine de la présente invention est celui des compositions à base de polyorganosiloxanes aptes à réticuler par des réactions de polyaddition ou d'hydrosilylation pour former des élastomères (RTV, LSR ou gel), faisant intervenir des substituants hydrogènes et des radicaux éthyléniquement insaturés, c'est-à-dire des alcényles en particulier du type vinyle. L'hydrosilylation est généralement catalysée par des composés métalliques, par exemple de nature platinique.

Les compositions à base de polyorganosiloxanes considérées selon l'invention réticulent soit à température ambiante soit à la chaleur par des réactions de polyaddition en présence d'un catalyseur métallique.

Les compositions selon l'invention peuvent être de type RTV, LSR ou gel. A titre indicatif, les compositions silicone RTV élastomères réticulables ont une viscosité $\eta$ à 25°C, telle que $\eta \leq 200\ 000$ mPa.s et les compositions silicones LSR élastomères réticulables ont une viscosité $\eta$, telle que :

$$100\ 000 \leq \eta \leq 2\ 000\ 000\ \text{mPa.s}$$

Les gels silicones mi-solides mi-liquides et qui sont traditionnellement utilisés pour la protection de matériels électroniques sensibles aux vibrations, aux chocs, à la température et comme matériau médical de base, notamment pour l'élaboration de prothèse, implants ou de pansements.

Les expressions RTV et LSR sont bien connues de l'homme de métier : RTV est l'abréviation de "Room Temperature Vulcanizing" et LSR est l'abréviation de "Liquid Silicone Rubber". Ces compositions élastomères silicones du type RTV, LSR ou gel sont maintenant bien connues et ont fait l'objet de diverses applications. On pourra se référer, par exemple, aux demandes de brevets FR-A-2 775 481, FR-A-2 732 976 et FR-A-2 848 215.

Cependant, un des problèmes fréquemment rencontré lors de la préparation d'un élastomère à partir de ce type de compositions est l'apparition d'une coloration jaune plus ou moins prononcée qui s'accentue dans le temps ou par l'usage d'une accélération de la réticulation par élévation de la température.

Ce problème est encore plus important pour les élastomères silicones dits transparents qui se caractérisent par l'absence ou la présence à très faible taux de charges renforçantes siliceuses.

Ainsi, un objectif de la présente invention est de mettre au point une composition à base de polyorganosiloxanes aptes à réticuler par des réactions de polyaddition ou d'hydrosilylation pour former des élastomères (RTV, LSR ou gel) ne présentant pas les inconvénients mentionnés ci-dessus.

Pour atteindre cet objectif, les inventeurs ont eu le mérite de mettre en évidence, de manière tout à fait surprenante et inattendue, que l'utilisation d'une résine polyorganosiloxane alcénylée particulière, dans des conditions quantitatives soigneusement et judicieusement choisies, permet de s'affranchir de ce problème de jaunissement résiduel ou tout du moins de le réduire de manière conséquente.

Cet objectif est atteint par la présente invention qui concerne l'utilisation pour réduire le jaunissement d'une composition d'élastomère silicone réticulée par hydrosilylation d'au moins une résine polyorganosiloxane **(D)**, comportant au moins un motif Si-alcényle, de préférence Si-vinyl et additionnée dans ladite composition avant réticulation, ladite résine polyorganosiloxane **(D)** comprenant :

a) au moins un motif siloxyle fonctionalisé de formule **(I)** :

$$Y\ R_a SiO_{\frac{(3-a)}{2}}$$

**(I)**

dans laquelle Y est un groupe alcényle en $C_2$-$C_{12}$ de préférence un groupe vinyle ou allyle, R est un groupe hydrocarboné monovalent choisi parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle et=1 1 ou 2,

b) au moins un motif siloxyle non fonctionalisés de formule **(II)** :

$$R_b SiO_{\frac{(4-b)}{2}}$$

**(II)**

avec R ayant la même définition que ci-dessus et b = 1, 2 ou 3 ; et
c) au moins un motif siloxyle Q de formule (III) :

$$SiO_{\frac{4}{2}}$$

**(III)**

ladite résine polyorganosiloxane **(D)** pouvant éventuellement contenir jusqu'à 2,5 % molaire de fonctions silanol et de préférence moins de 0,5% molaire de fonctions silanol, et ladite composition d'élastomères silicones réticulée par hydrosilylation pouvant éventuellement contenir une charge de renforcement autre qu'une résine polyorganosiloxane **(D).**

Face au problème posé par ce jaunissement résiduel des élastomères, il est du mérite des inventeurs d'avoir compris l'importance de la présence d'une résine polyorganosiloxane **(D)** particulière et comportant des motif Si-alcényle dans les compositions silicones réticulant par des réactions de polyaddition ou d'hydrosilylation.

Cette modalité inventive permet de s'affranchir de ce problème de jaunissement résiduel ou tout du moins de le réduire de manière conséquente.

Les résines **(D)** utiles selon l'invention sont des résines silicones à fonctions "Si-alcényle", c'est-à-dire des résines à fonctions vinyles, allyles et/ou héxényles.

Selon un mode préféré de l'invention, les résines polyorganosiloxanes **(D)** sont des résines silicones vinylées.

Avantageusement, les résines silicones vinylées **(D)** selon l'invention comportent dans leurs structures de 0,1 à 20 % en poids de groupe(s) alcényle(s).

Dans ces résines, les groupements alcényles (Y) peuvent être situés sur des motifs siloxyles (M), (D) ou (T). L'homme du métier du domaine des silicones utilise couramment cette nomenclature qui représente les motifs siloxyles suivants :

$R_3SiO_{1/2}$ (motif M), $RSiO_{3/2}$ (motif T) et $R_2SiO_{2/2}$ (motif D).

Ces résines peuvent être préparées par exemple selon le procédé décrit dans le brevet US-A-2 676 182.

Le taux de groupements silanol de ces résines peut être contrôlé à l'aide d'un traitement bien connu de l'homme de l'art. Ce traitement fait intervenir un silazane, qui permet d' abaisser jusqu'à moins de 0,3 % en poids, le taux de fonctions silanol restantes.

Un certain nombre de ces résines sont disponibles dans le commerce, le plus souvent à l'état de solutions.

Dans un mode préféré de réalisation de l'invention, la résine polyorganosiloxane vinylée (D) est une résine qui comprend des motifs Si-Vi et est choisie parmi le groupe constitué par les résines silicones suivantes :

- $MD^{Vi}Q$ où les groupes vinyles sont inclus dans les motifs (D),
- $MO^{Vi}TO$ où les groupes vinyles sont inclus dans les motifs (D),
- $MM^{Vi}Q$ où les groupes vinyles sont inclus dans une partie des motifs (M),
- $MM^{Vi}TQ$ où les groupes vinyles sont inclus dans une partie des motifs (M),
- $MM^{Vi}DD^{Vi}O$ où les groupes vinyles sont inclus dans les motifs (M) et (D),
- et leurs mélanges,

avec :

- M = motif siloxyle de formule $R_3SiO_{1/2}$
- $M^{Vi}$ = motif siloxyle de formule $(R_2)(vinyle)SiO_{1/2}$
- D = motif siloxyle de formule $R_2SiO_{2/2}$
- $D^{Vi}$ = motif siloxyle de formule $(R)(vinyle)SiO_{2/2}$
- Q = motif siloxyle de formule $SiO_{4/2}$ ;
- T = motif siloxyle de formule $RSiO_{3/2}$, et
- les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle

Selon un mode particulièrement avantageux, la résine polyorganosiloxane **(D)** est choisie parmi le groupe constitué par les résines polyorganosiloxanes vinylées de formules **(IV)** à **(VI)** suivantes :

MM$^{Vi}$Q **(IV)** ; MC$^{Vi}$Q **(V)** et MM$^{Vi}$DD$^{Vi}$Q **(VI)**
avec :

- M = motif siloxyle de formule $R_3SiO_{1/2}$
- M$^{Vi}$ = motif siloxyle de formule $(R_2)(vinyl)SiO_{1/2}$
- D = motif siloxyle de formule $R_2SiO_{2/2}$
- C$^{Vi}$= motif siloxyle de formule $(R)(vinyle)SiO_{2/2}$
- Q = motif siloxyle de formule $SiO_{4/2}$ ; et
- les groupements R, identiques ou diférents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle.

Selon un autre mode particulier de l'invention, la résine polyorganosiloxane vinylée **(D)** est additionnée à la composition d'élastomère silicones réticulée par hydrosilylation sous forme d'un mélange dans au moins une huile polyorganosiloxane.
Selon un autre mode de réalisation de l'invention, la résine polyorganosiloxane vinylée **(D)** est présente dans la composition d'élastomère silicone avant réticulation jusqu'à 20 %, de préférence jusqu'à 15% et encore plus préférentiellement entre 1 et 15% en poids par rapport au poids total de la composition
Selon un mode de réalisation particulier de l'invention, la composition d'élastomère silicones réticulée par hydrosilylation comprend avant réticulation :

- au moins un polyorganosiloxane **(A)** présentant, par molécule au moins deux groupes alcényles liés au silicium ;
- au moins un polyorganosiloxane **(B)** présentant, par molécule au moins trois atomes d'hydrogène liés au silicium ;
- une quantité catalytiquement efficace d'au moins un catalyseur métallique **(C)** (de préférence à base de platine) ;
- au moins une résine polyorganosiloxane vinylée **(D)** telle que définie selon la revendication 1 ou 2,
- éventuellement au moins un inhibiteur de réticulation **(E);**
- éventuellement au moins un promoteur d'adhérence **(F) ;**
- éventuellement un polyorganosiloxane **(H)** non réactif par polyaddition et
- éventuellement une charge **(G),** renforçante ou non; autre qu'une résine polyorganosiloxane vinylée **(D).**

Les polyorganosiloxanes **(A)** et **(B)** peuvent être avantageusement choisis parmi les espèces suivantes :

- un polyorganosiloxane(s) **(A)** comprennant des motifs siloxyles **(VII)** et **(VIII) :**

  - R$^2$$_n$SiO$_{(4- n/ 2)}$ **(VII)**
  - YR$^2$$_y$SiO$_{(3- y / 2)}$ **(VIII),** et

- un polyorganosiloxane **(B)** comprennant des motifs siloxyles **(IX)** et **(X)**

  - R$^2$$_n$SiO$_{(4- n/ 2)}$ **(IX)**
  - HR$^2$$_w$SiO$_{(3- w/ 2)}$ **(X)**

formules dans lesquelles les divers symboles ont la signification suivante :

- les symboles R$^2$, identiques ou différents, représentent chacun un groupement de nature hydrocarbonée non hydrolysable, ce radical pouvant être :

  a) un radical alkyle ayant de 1 à 5 atomes de carbone et pouvant comporter de 1 à 6 atomes de chlore,
  b) un radical cycloalkyle ayant de 3 à 8 atomes de carbone et pouvant contenir de 1 à 4 atomes de chlore,
  c) un radical aryle, alkyaryle et ayant de 6 à 8 atomes de carbone et pouvant contenir de 1 à 4 atomes de chlore, ou
  d) un radical cyanoalkyle ayant de 3 à 4 atomes de carbone ; les groupes :

- méthyle ; éthyle ; propyle ; isopropyle ; butyle ; isobutyle ; n-pentyle ; t-butyle ; chlorométhyle ; dichlorométhyle ; α-chloroéthyle; α,β-dichloroéthyle; β-cyanoéthyle ; γ-cyanopropyle, phényle : p-chlorophényle ; m-chlorophényle ; dichloro-3,5 -phényle; trichloro-phényle ; tétrachlorophényle ; o-, p- ou m-totyle et xylyles (le diméthyl-2, 3-phényle et le diméthyl-3, 4-phényle étant préférés) ; les groupes méthyle et phényle étant particulièrement préférés ;

avec :
- les symboles Y, identiques ou différents, représentant un groupe alcényle en $C_2$-$C_6$ (de préférence vinyle) ;
- n = un nombre entier égal à 0, 1, 2 ou 3 ;
- y = un nombre entier égal à 0, 1 ou 2 ; et
- w = un nombre entier égal à 0, 1 ou 2 .

La nature du polyorganosiloxane (A) et donc les rapports entre les motifs siloxyles (VII) et (VIII) et la répartition de ceux-ci, sont comme on le sait, choisis en fonction du traitement de réticulation qui sera effectué sur la composition durcissable en vue de sa transformation en élastomère.

Comme exemples de motifs siloxyles de formule (VIII) constituant le polyorganosiloxane (A), on peut citer les motifs suivants: vinyldiméthylsiloxyle, vinylphénylméthylsiloxyle, vinylméthylsiloxyle et vinylsiloxyle.

Les motifs diméthylsiloxyle, méthylphénylsiloyle, diphénylsiloxyle, méthyl-siloxyle et phénylsiloxyle sont des exemples de motifs siloxyle de formule (VII) du polyorganosiloxane (A).

Des exemples de polyorganosiloxane (A) sont des composés linéaires et cycliques comme :

- les diméthylpolysiloxanes à extrémités diméthylvinylsilyle,
- les copolymères (méthylvinyle)(diméthyl)polysiloxanes à extrémités triméthyl-silyles,
- les copolymères(méthylvinyle)(diméthyle)polysiloxanes à extrémités diméthylvinylsilyles, ou
- les méthylvinylpolysiloxanes cycliques.

Concernant le polyorganohydrogénosiloxane (B), il est avantageusement choisi parmi les homopolymères et les copolymères linéaires, cycliques ou en réseau présentant en moyenne, par molécule, de préférence au moins 3 atomes d'hydrogène liés à des atomes de silicium différents et dont les radicaux organiques liés aux atomes de silicium sont choisis parmi les radicaux méthyle, éthyle ; 60% molaire au moins de ces radicaux (et de préférence la totalité de ces radicaux) étant des radicaux méthyle.

Selon une disposition avantageuse, le polyorganohydrogénosiloxane (B) est utilisé en quantité telle que le rapport molaire des fonctions hydrures du polyorganohydrogénosiloxane (B) sur les groupes vinyles du polyorganosiloxane (A) soient compris entre 0,4 et 10.

Des exemples de motifs siloxyles composant le polyorganosiloxane (B) sont les suivants : $H(CH_3)_2SiO_{1/2}$, $H(CH_3)SiO_{2/2}$, $H(C_6H_5)SiO_{2/2}$.

A titre d'exemples de polyorganosiloxane (B), on peut citer :

- les diméthylpolysiloxanes à extrémités hydrogénodiméthylsilyles,
- les copolymères à motifs (diméthyle)-(hydrogénométhyle) polysiloxanes à extrémités triméthylsilyles,
- les copolymères à motifs (diméthyle)(hydrogénométhyle) polysiloxanes à extrémités hydrogénodiméthylsilyles,
- les (hydrogénométhyles)polysiloxanes à extrémités triméthylsilyles, et
- les (hydrogénométhyles)polysiloxanes cycliques.

Ces polyorganosiloxanes (A) et (B) sont par exemple respectivement un polyorganovinylsiloxane et un polyorganohydrogénosiloxane. Les substituants organiques autres que les groupements réactifs vinyle et hydrogène, sont par exemple des méthyles ou des cyclohexyles. Les hydrogènes et les vinyles sont portés par des motifs siloxyles en lieu place d'un des groupements R dans les formules suivantes:

- M = motif siloxyle de formule $R_3SiO_{1/2}$
- D = motif siloxyle de formule $R_2SiO_{2/2}$
- T = motif siloxyle de formule $RSiO_{3/2}$, et

Ces motifs M, D hydrogénés ou vinylés comportent respectivement chacun un ou plusieurs H ou Vinyle, de préférence un seul.

Le nombre de motifs ≡SiH ou ≡SiVi par molécule est de préférence supérieur ou égal à 1. Cela peut notamment représenter de 0,01% à 50 % (de préférence 0,1 à 10 %) de vinyle en poids pour le polyorganosiloxane (A) et de 0,001 % à 5 % (de préférence 0,05 à 2 %) d'hydrogène en poids pour le polyorganosiloxane (B).

Des polyorganosiloxanes **(B)** appropriés sont :

- les polyméthylhydrogénosiloxanes à extrémités -Si(CH$_3$)$_3$,
- les polydiméthylsiloxanes à extrémités -Si(CH$_3$)$_2$H,
- les polymères méthylhydrogénodiméthylsiloxanes à extrémités -Si(CH$_3$)$_2$H et/ou - Si(CiF$_3$)$_3$,
- les polymères méthylhydrogénocyclosiloxanes,
- les résines polyorganohydrogénosiloxanes.

En général, les polyorganosiloxanes **(A)** et **(B)** ont une masse moléculaire moyenne comprise entre 1.10$^2$ et 1.10$^7$ (g/mol).

Les compositions selon l'invention peuvent être de type RTV, LSR ou gel. A titre indicatif, les compositions silicone RTV élastomères réticulables ont une viscosité η à 25°C, telle que η ≤ 200 000 mPa.s et les compositions silicones LSR élastomères réticulables ont une viscosité η, telle que :

$$100\ 000 \leq \eta \leq 2\ 000\ 000\ \text{mPa.s}$$

S'agissant des polyorganosiloxanes **(A)** de polyaddition mis en oeuvre dans les compositions selon l'invention, on en distingue plusieurs classes qui se différencient par leur viscosité et qui définissent des compositions élastomères silicones de type RTV ou LSR.

Dans le cas des compositions RTV réticulant par des réactions de polyaddition, le (ou les) constituant(s) polyorganosiloxane(s) **(A)** sont choisis parmi ceux porteur(s) de groupements alcényl-silylés, lesquels présentent avantageusement une viscosité η à 25°C comprise dans l'intervalle suivant:

100 ≤ η ≤ 200 000 mPa.s et de préférence 500 ≤ η ≤ 100 000 mPa.s.

Dans le cas des compositions LSR réticulant par des réactions de polyaddition, le (ou les) polyorganosiloxane (s) **(A)** porteur(s) de groupements alcényl-silylés ont, par exemple une viscosité η' à 25°C comprise dans l'intervalle 10 000 ≤ η' ≤ 500 000 mPa.s.

Dans les cas des compositions polyorganosiloxanes RTV ou LSR, le (ou les) constituant(s) polyorganosiloxane (s) **(B)** porteur(s) de groupements hydrogéno-silylés a(ont) généralement une viscosité à 25°C au plus égale à 10 000 mPa.s et, de préférence, comprise entre 5 et 1000 mPa.s.

Toutes les viscosités dont il est question dans le présent exposé correspondent à une grandeur de viscosité dynamique à 25°C mesurée, de manière connue en soi, à un gradient de vitesse de cisaillement représentatif de son utilisation.

Selon une variante, il est envisageable que la composition selon l'invention comprenne des mélanges de polyorganosiloxanes différents par leur nature et/ou par leur viscosité.

Les catalyseurs métalliques **(C)** avantageusement utilisés dans la composition selon l'invention, comprennent tous les catalyseurs utiles pour l'hydrosilylation de polyorganosiloxanes porteurs de motifs ≡Si-H et de polyorganosiloxanes porteurs de motifs ≡Si-[insaturation alcényle]. Il peut donc s'agir de composés du platine, du rhodium, de l'iridium, du nickel, du ruthénium et/ou du palladium. Il s'agit plus particulièrement de composés de l'iridium ou encore mieux du platine.

Le composé du platine peut être tout complexe du platine et d'un produit organique, e.g. ceux décrits dans les brevets US-B-3 159 601, US-B-3 159 602, US-B-3 220 972 et les brevets européens EP-A-0 057 459, EP-A-0 188 978 et EP-A-0 190 530, ou tout complexe du platine et d'organosiloxanes vinylés, e.g. ceux décrits dans les brevets US-B-3 419 593, US-B-3 715 334, US-B-3 377 432 et US-B-3 814 730.

On peut citer l'acide chloroplatinique, un acide chloroplatinique modifié par un alcool, ou encore un complexe de l'acide chloroplatinique avec une oléfine, un aldéhyde ou un vinylsiloxane entre autres. Le brevet US-B-2 823 218 décrit un catalyseur d'hydrosilylation du type acide chloroplatinique et le brevet US-B-3 419 593 est relatif à des catalyseurs formés par des complexes d'acide chloroplatinique et d'organosilicone du type vinylsiloxane. Des complexes de platine et d'hydrocarbures utiles comme catalyseur d'hydrosilylation sont divulgués par les brevets US-B-3 159 601 et 3 159 602. Le brevet US-B-3 723 497 décrit un acétylacétonate de platine et le brevet US-B-3 220 972 a pour objet des catalyseurs à base d'alcoolate de platine.

Les catalyseurs **(C)** plus spécialement sélectionnés conformément à l'invention sont des complexes platine/ siloxane insaturés, en particulier les complexes platine/vinylsiloxane, notamment ceux obtenus par réaction entre un halogénure de platine et un matériau organosilicique insaturé tel qu'un silane insaturé ou un siloxane insaturé, e.g. selon l'enseignement de US-B-3 775 452 auquel l'homme du métier peut se reporter. L'invention s'applique de préférence à la solution ou complexe de Karstedt décrit plus haut.

Concernant l'inhibiteur de réticulation **(E),** lorsqu'il est présent suivant les applications visées, il est ajouté à la composition en quantité telle qu'il inhibe l'action du catalyseur à température ambiante, cette action inhibitrice cessant lors du traitement de réticulation à température élevée ; cette quantité est généralement de l'ordre de 0,001 à 1 partie en poids.

Parmi les inhibiteurs, on peut citer les dialkyldicarboxylates (brevets US-A-4,256,870 ; 4,476,166) ; les dialkylacétylènedicarboxylates (brevet US-A-4,347,346) ; les alcools acétyléniques (brevets US-A-3,989,866; 4,336,364; 3,445,420)...

Conformément à une disposition de l'invention, lorsque la composition est utilisée pour le moulage, celle-ci ne comprend pas de promoteur d'adhérence **(F).** Pour d'autres applications nécessitant des propriétés d'adhésion de l'élastomère après réticulation au moins un promoteur d'adhérence **(F)** peut-être ajouté à la composition. Il comprend de préférence un mélange comprenant:

a) au moins un organosilane alcoxylé contenant, par molécule, au moins un groupe alcényle en $C_2$-$C_6$, par exemple le vinyltriméthoxysilane **(VTMS) ;** et

b) au moins un composé organosilicié comprenant au moins un radical époxy, par exemple des époxyalcoxysiliciés et plus préférentiellement encore des époxyalcoxymonosilanes telles que :

- le 3-glycidoxypropyltriméthoxysilane **(GLYMO),** ou
- le 3,4-époxycyclohexyléthyltriméthoxysilane.

Une combinaison avantageuse pour former le promoteur d'adhérence est la suivante : **VTMS** / **GLYMO.**

Suivant les applications visées, une charge **(G),** renforçante, non renforçante ou semi-renforçante, autre qu'une résine polyorganosiloxane vinylée **(D).** peut être présente dans la composition.

Lorsqu'il s'agit d'une charge renforçante, elle peut-être choisie parmi les matières minérales, en particulier siliceuses. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 $\mu$m et une surface spécifique BET supérieure à 50 m$^2$/g, de préférence comprise entre 50 et 400 m$^2$/g, notamment entre 90 et 350 m$^2$/g.

Lorsqu'une charge non renforçante ou semi-renforçante (de bourrage) est utilisée, elle avantageusement mise en oeuvre à titre de complément à la charge renforçante. Cette charge non renforçante ou semi-renforçante peut elle aussi être sélectionnée dans le groupe des matières minérales comprenant entre autres les charges siliceuses semi-renforçantes, telles que des terres de diatomées ou du quartz broyé. Elle peut être aussi une matière minérale non siliceuse. Des exemples de charges non siliceuses utilisables seules ou en mélange sont le noir de carbone, le dioxyde de titane, l'oxyde de magnésium, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum, la chaux éteinte, les terres de diatomées, le quartz broyé et le zircone broyé. Ces charges non siliceuses ont une granulométrie généralement comprise entre 0,001 et 300 $\mu$m et une surface BET inférieure à 100 m$^2$/g.

De façon pratique mais non limitative, les charges employées peuvent être un mélange de quartz et de silice.

Les charges peuvent être prétraitées par tout produit approprié, e.g. par des chlorosilanes, des cyclosiloxanes ou de l'hexaméthyldisilazane (HMDZ), ou d'autres composés organosiliciques habituellement employés pour cet usage, tels que des organochlorosilanes, des diorganocyclopolysiloxanes, des hexaorganodisiloxanes, des hexorganodisilazanes ou des diorganocyclopolysilazanes (brevets français FR-A-1 126 884, FR-A-1 136 885, FR-A-1 236 505, brevet anglais GB-A-1 024 234).

Un traitement in situ de silice par l'HMDZ est décrit en détail dans la demande de brevet WO-A-98/58997, qui est incorporée dans son intégralité dans le présent exposé par référence.

Ces charges pourront être présentes à raison :

~ de 5 à 30 %, de préférence de 15 à 25 % par rapport à la composition totale pour les charges renforçantes,

~ de 5 à 40 %, de préférence de 10 à 30 % de préférence de 2 à 10 % et plus préférentiellement de plus de 3 ou 4 % en poids par rapport à la composition totale, pour les charges semi-renforçantes ou de bourrage,

Plus généralement, sur le plan quantitatif, les compositions selon l'invention renvoient à des proportions standards dans le domaine technique considéré, sachant que l'on doit tenir compte également de l'application visée.

Les compositions silicones de invention peuvent en outre comprendre des additifs fonctionnels usuels φ. Comme familles d'additifs fonctionnels usuels φ, on peut citer :

■ les neutralisants,

■ les additifs de tenue thermique
■ les additifs pour augmenter la consistance
■ les additifs de tenue aux huiles, au feu (par exemple les oxydes métalliques).

Selon un autre mode de réalisation, la composition d'élastomère silicones réticulée par hydrosilylation n'est pas transparente et comprend avant réticulation :

- au moins un polyorganosiloxane **(A)** présentant, par molécule au moins deux groupes alcényles liés au silicium ;
- au moins un polyorganosiloxane **(B)** présentant, par molécule au moins trois atomes d'hydrogène liés au silicium ;
- une quantité catalytiquement efficace d'au moins un catalyseur métallique **(C)** (de préférence à base de platine) ;
- au moins une résine polyorganosiloxane vinylée **(D)** telle que définie selon la revendication 1 ou 2 ;
- au moins une charge **(G) ,** renforçante, non renforçante ou semi-renforçante, autre qu'une résine polyorganosiloxane vinylée **(D),**
- éventuellement un polyorganosiloxane **(H)** non réactif par polyaddition
- éventuellement au moins un inhibiteur de réticulation **(E);** et
- éventuellement au moins un promoteur d'adhérence **(F).**

Les composants **(A)** à **(H)** ont la même définition que ci-dessus.

S'agissant des applications, la composition d'élastomère silicones réticulée par hydrosilylation est destinée à des applications dans le domaine du moulage en particulier le prototypage ou pour le moulage de matériau dentaire ou para-médical ou dans le domaine des gels silicones en particulier pour la protection de matériels électroniques sensibles aux vibrations, aux chocs, à la température (« Potting ») et comme matériau médical de base, notamment pour l'élaboration de prothèse, implants ou de pansements.

La présente invention sera mieux comprise à la lumière des exemples qui suivent.

## Exemples

L'indice de jaunissement est mesuré sur un colorimètre SPECTRO-SENSOR II commercialisé par la société Applied Color Systems Inc.

## Exemple 1

Fluides polyoraanosiloxane (POS) vinylés :

- $\alpha,\omega$-diméthylvinyl-polydiméthylsiloxane **(1) :** polydiméthylsiloxane bloqué par des motifs $(CH_3)_2ViSiO_{0,5}$ ayant une viscosité d'environ 600 mPa.s
- $\alpha,\omega$-diméthylvinyl-polydiméthylsiloxane **(2) :** polydiméthylsiloxane bloqué par des motifs $(CH_3)_2ViSiO_{0,5}$ ayant une viscosité d'environ 1500 mPa.s
- $\alpha,\omega$-diméthylvinyl-polydiméthylsiloxane **(3) :** polydiméthylsiloxane bloqué par des motifs $(CH_3)_2ViSiO_{0,5}$ ayant une viscosité d'environ 10000 mPa.s
- $\alpha,\omega$-diméthylvinyl-polydiméthylsiloxane **(4) :** polydiméthylsiloxane bloqué par des motifs $(CH_3)_2ViSiO_{O,5}$ ayant une viscosité d'environ 100000 mPa.s
- $\alpha,\omega$-diméthylvinyl-polydiméthylsiloxane **(5) :** polydiméthylsiloxane bloqué par des motifs $(CH_3)_2ViSiO_{0,5}$ ayant une viscosité d'environ 165000 mPa.s
- Résine vinylée selon l'invention : résine polyorganosiloxane vinylée **(6)** de formule $MM^{Vi}Q$ en solution (40 % en poids) dans du polydiméthylsiloxane bloqué par des motifs $(CH_3)_2ViSiO_{0,5}$ , la teneur en vinyle de cette composition est de 1,1 % en poids.
- Réticulant SiH : réticulant siloxane SiH **(7)** de structure M'Q, la teneur en SiH est de 26 % en poids.
- Catalyseur au platine de Karstedt.

**Tableau 1** : Indice de jaunissement de composition silicone après réticulation 24 h à température ambiante

| Nature du fluide vinylé-viscosité (mPa.S) | POS (1) 600 Comparatif | POS (2) 1500 Comparatif | POS (3) 10000 Comparatif | POS (4) 100000 Comparatif | POS (5) 165000 Comparatif | Résine vinylée (6) Invention |
|---|---|---|---|---|---|---|
| Quantité du fluide vinylé | 90 | 90 | 90 | 90 | 90 | 92 |
| Réticulant SiH (7) | 1,75 | 1,2 | 0,6 | 0,29 | 0,25 | 4,8 |
| Polydiméthylsiloxane de viscosité 500 mPa.s | 10 | 10 | 10 | 10 | 10 | 10 |
| Catalyseur au Pt (8) ppm | 40 | 40 | 40 | 40 | 40 | 40 |
| Indice de jaune après 24 h | 9,77 | 7,24 | 12,76 | 18,26 | 22,58 | 2,91 |
| Indice de jaune après 96 h | 10,92 | 11,74 | 14,52 | 20,51 | 26,50 | 2,68 |

Les quantités du Tableau 1 sont données en parties (poids) sauf pour le catalyseur au Pt donné en ppm de platine.
Ratio SiH/SiVi = 1,2.
On remarque que la composition contenant une résine vinylée selon l'invention (6) conduit à des indices de jaune très faible comparée aux autres compositions contenant les POS (1) à (5).

### Exemple 2

Tableau 2 : Indice de jaunissement de composition silicone après réticulation 24 h à température ambiante

|  | Comparatif | Invention |
|---|---|---|
| Résine vinylée **(6)** | 0 | 9 |
| Fluide POS vinylé **(4)** | 90 | 81 |
| Réticulant SiH **(7)** | 0,29 | 0,74 |
| Polydiméthylsiloxane de viscosité 500 mPa.s | 10 | 10 |
| Catalyseur au Pt **(8)** ppm | 40 | 40 |
| Indice de jaune après 24 h | 18,26 | 4,73 |
| Indice de jaune après 96 h | 20,51 | 4,22 |

Les quantités du Tableau 2 sont données en parties (poids) sauf pour le catalyseur au Pt donné en ppm de platine.
Ratio SiH/SiVi = 1,2.
On remarque que l'ajoût de la résine vinylée selon l'invention (6) permet de diminuer de près de 75 % l'indice de jaunissement.

**Exemple 3 (comparatif) - Exemple 4 (Invention)**

- Préparation de la composition silicone réticulable bicomposant **RTV 2 (Comp.)**

Partie **A1** du bicomposant :

Dans un réacteur à température ambiante on mélange :

- 80 parties en poids d'un polyorganosiloxane qui est un $\alpha,\omega$-divinylpolydiméthylsiloxane
- 20 parties en poids de silice traitée hexaméthyldisilazane (HMDZ), et
- 20 ppm de platine.

Partie **B1** du bicomposant :

Dans un réacteur à température ambiante on mélange :

- 34 parties en poids d'un polyorganosiloxane qui est un $\alpha,\omega$-divinylpolydiméthylsiloxane
- 14 parties en poids de silice traitée hexaméthyldisilazane (HMDZ),
- 16 parties en poids polyorganosiloxane qui est un $\alpha,\omega$-dihydrogénopolydiméthylsiloxane
- 34 parties en poids d'un polyorganosiloxane qui est un $\alpha,\omega$-dihydrogénopoly(diméthyl)(méthylhydrogéno)siloxane
- 2 parties en poids tétra(vinylmethyl)cyclosiloxane

Le bicomposant **RTV-2 (Comp.)** est obtenu en mélangeant à température ambiante 100 parties de **A1** et 10 parties de **B1.**

- Préparation de la composition silicone réticulable bicomposant **RTV 2 (Inv.)**

Partie **A2** du bicomposant :

A la partie A1 (100 g) de la composition décrite dans l'Exemple 3, on ajoute :

- 5 g de la résine polyorganosiloxane vinylée **(6),** et
- 0,26 g de réticulant siloxane SiH **(7)**

Le bicomposant **RTV-2 (Inv.)** est obtenu en mélangeant à température ambiante 100 parties de **A2** et 10 parties de **B1.**

**Tableau 3 :** Indice de jaunissement de composition silicone après réticulation 24 h à température ambiante

|  | RTV-2 (Comp.)<br>Exemple 3 | RTV-2 (Inv.)<br>Exemple 4 |
|---|---|---|
| Indice de jaune après 24 h | 15,67 | 12,39 |
| Indice de jaune après 96 h | 15,86 | 12,75 |

On remarque que l'ajoût de la résine vinylée **(6)** selon l'invention permet de diminuer de près de 20 % l'indice de jaunissement.

**Revendications**

1. Utilisation pour réduire le jaunissement d'une composition d'élastomère silicone réticulée par hydrosilylation d'au moins une résine polyorganosiloxane **(D),** comportant au moins un motif Si-alcényle, de préférence Si-vinyl et additionnée dans ladite composition avant réticulation, ladite résine polyorganosiloxane **(D)** comprenant :

    a) au moins un motif siloxyle fonctionalisé de formule **(I) :**

    $$Y\, R_a SiO_{\frac{(3-a)}{2}}$$

    **(I)**

    dans laquelle Y est un groupe alcényle en $C_2$-$C_{12}$ de préférence un groupe vinyle ou allyle, R est un groupe hydrocarboné monovalent choisi parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle et a = 0, 1 ou 2,
    b) au moins un motif siloxyle non fonctionalisés de formule **(II)** :

    $$R_b SiO_{\frac{(4-b)}{2}}$$

    **(II)**

    avec R ayant la même définition que ci-dessus et b = 1, 2 ou 3 ; et
    c) au moins un motif siloxyle Q de formule **(III)** :

    $$SiO_{\frac{4}{2}}$$

    **(III)**

ladite résine polyorganosiloxane **(D)** pouvant éventuellement contenir jusqu'à 2,5 % molaire de fonctions silanol et de préférence moins de 0,5% molaire de fonctions silanol et ladite composition d'élastomères silicones réticulée par hydrosilylation pouvant éventuellement contenir une charge de renforcement autre qu'une résine polyorganosiloxane **(D).**

2. Utilisation selon la revendication 1 dans laquelle la résine polyorganosiloxane vinylée **(D)** est une résine qui comprend des motifs Si-Vi et qui est choisie parmi le groupe constitué par :

- $MD^{Vi}Q$ où les groupes vinyles sont inclus dans les motifs (D),
- $MD^{Vi}TQ$ où les groupes vinyles sont inclus dans les motifs (D),
- $MM^{Vi}Q$ où les groupes vinyles sont inclus dans une partie des motifs (M),
- $MM^{Vi}TQ$ où les groupes vinyles sont inclus dans une partie des motifs (M),
- $MM^{Vi}DD^{Vi}Q$ où les groupes vinyles sont inclus dans les motifs (M) et (D),
- et leurs mélanges,

avec :

- M = motif siloxyle de formule $R_3SiO_{1/2}$
- $M^{Vi}$ = motif siloxyle de formule $(R_2)(vinyl)SiO_{1/2}$
- D = motif siloxyle de formule $R_2SiO_{2/2}$
- $D^{Vi}$ = motif siloxyle de formule $(R)(vinyle)SiO_{2/2}$
- Q = motif siloxyle de formule $SiO_{4/2}$ ;
- T = motif siloxyle de formule $RSiO_{3/2}$, et
- les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle

3. Utilisation selon l'une des revendications précédentes dans laquelle la résine polyorganosiloxane **(D)** est choisie parmi le groupe constitué par les résines polyorganosiloxanes vinylées de formules (IV) à (VI) suivantes :

$MM^{Vi}Q$ **(IV) ;** $MD^{Vi}Q$ **(V)** et $MM^{Vi}DD^{Vi}Q$ **(VI)**
avec :

- M = motif siloxyle de formule $R_3SiO_{1/2}$
- $M^{Vi}$ = motif siloxyle de formule $(R_2)(vinyl)SiO_{1/2}$
- D = motif siloxyle de formule $R_2SiO_{2/2}$
- $D^{Vi}$ = motif siloxyle de formule $(R)(vinyle)SiO_{2/2}$
- Q = motif siloxyle de formule $SiO_{4/2}$ ; et
- les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle.

4. Utilisation selon l'une des revendication précédente dans laquelle la composition d'élastomère silicones réticulée par hydrosilylation comprend avant réticulation :

- au moins un polyorganosiloxane **(A)** présentant, par molécule au moins deux groupes alcényles liés au silicium ;
- au moins un polyorganosiloxane (B) présentant, par molécule au moins trois atomes d'hydrogène liés au silicium ;
- une quantité catalytiquement efficace d'au moins un catalyseur métallique **(C)** (de préférence à base de platine) ;
- au moins une résine polyorganosiloxane vinylée **(D)** telle que définie selon la revendication 1 ou 2,
- éventuellement au moins un inhibiteur de réticulation **(E);**
- éventuellement au moins un promoteur d'adhérence **(F) ;**
- éventuellement un polyorganosiloxane **(H)** non réactif par polyaddition et
- éventuellement une charge **(G),** renforçante ou non; autre qu'une résine polyorganosiloxane vinylée **(D).**

5. Utilisation selon l'une des revendications précédentes dans laquelle la composition d'élastomère silicones réticulée par hydrosilylation n'est pas transparente et comprend avant réticulation :

- au moins un polyorganosiloxane **(A)** présentant, par molécule au moins deux groupes alcényles liés au silicium ;
- au moins un polyorganosiloxane **(B)** présentant, par molécule au moins trois atomes d'hydrogène liés au silicium ;
- une quantité catalytiquement efficace d'au moins un catalyseur métallique **(C)** (de préférence à base de platine) ;
- au moins une résine polyorganosiloxane vinylée **(D)** telle que définie selon la revendication 1 ou 2 ;
- au moins une charge **(G) ,** renforçante, non renforçante ou semi-renforçante, autre qu'une résine polyorganosiloxane vinylée **(D),**
- éventuellement un polyorganosiloxane **(H)** non réactif par polyaddition
- éventuellement au moins un inhibiteur de réticulation **(E);** et
- éventuellement au moins un promoteur d'adhérence **(F).**

6. Utilisation selon l'une des revendications précédentes dans laquelle la résine polyorganosiloxane vinylée **(D)** est présente dans la composition d'élastomère silicone avant réticulation jusqu'à 20 %, de préférence jusqu'à 15% et encore plus préférentiellement entre 1 et 15% en poids par rapport au poids total de la composition.

7. Utilisation selon l'une des revendications précédentes dans laquelle la composition d'élastomère silicones réticulée par hydrosilylation est destinée à des applications dans le domaine du moulage en particulier le prototypage ou pour le moulage de matériau dentaire ou para-médical ou dans le domaine des gels silicones en particulier pour la protection de matériels électroniques sensibles aux vibrations, aux chocs, à la température et comme matériau médical de base, notamment pour l'élaboration de prothèse, implants ou de pansements.

**Claims**

1. use, for reducing yellowing of a silicone elastomer composition crosslinked by hydrosilylation, of at least one polyorganosiloxane resin (D), comprising at least one Si-alkenyl unit, preferably Si-vinyl unit, which is added to said composition before crosslinking, the said polyorganosiloxane resin (D) comprising:

   a) at least one functionalized siloxyl unit of formula (I):

$$Y\,R_a SiO_{\frac{(3-a)}{2}}$$
$$(I)$$

   in which Y is a $C_2$-$C_{12}$ alkenyl group, preferably a vinyl or allyl group, R is a monovalent hydrocarbon group chosen from alkyl groups having from 1 to 8 carbon atoms inclusive, such as the methyl, ethyl, propyl and 3,3,3-trifluoropropyl groups, and aryl groups, such as xylyl, tolyl and phenyl, and a = 0, 1 or 2,
   b) at least one nonfunctionalized siloxyl unit of formula (II):

$$R_b SiO_{\frac{(4-b)}{2}}$$
$$(II)$$

   with R having the same definition as above and b = 1, 2 or 3; and
   c) at least one siloxyl unit Q of formula (III):

$$SiO_{\frac{4}{2}}$$
$$(III)$$

   it being possible for said polyorganosiloxane resin (D) optionally to comprise up to 2.5 mol% of silanol functional groups and preferably less than 0.5 mol% of silanol functional groups and it being possible for said silicone elastomer composition which is crosslinked by hydrosilylation optionally to comprise a reinforcing filler other than a polyorganosiloxane resin (D).

2. Use according to Claim 1, in which the vinylated polyorganosiloxane resin (D) is a resin which comprises Si-Vi units and which is chosen from the group consisting of:

- $MD^{Vi}Q$, where the vinyl groups are included in the (D) units,
- $MD^{Vi}TQ$, where the vinyl groups are included in the (D) units,
- $MM^{Vi}Q$, where the vinyl groups are included in a portion of the (M) units,
- $MM^{Vi}TQ$, where the vinyl groups are included in a portion of the (M) units,
- $MM^{Vi}DD^{vi}Q$, where the vinyl groups are included in the (M) and (D) units,
- and their mixtures,

with:

- M = siloxyl unit of formula $R_3SiO_{1/2}$
- $M^{Vi}$ = siloxyl unit of formula $(R_2)(vinyl)SiO_{1/2}$
- D = siloxyl unit of formula $R_2SiO_{2/2}$
- $D^{Vi}$ = siloxyl unit of formula $(R)(vinyl)SiO_{2/2}$
- Q = siloxyl unit of formula $SiO_{4/2}$
- T = siloxyl unit of formula $RSiO_{3/2}$, and
- the R groups, which are identical or different, are monovalent hydrocarbon groups chosen from alkyl groups having from 1 to 8 carbon atoms inclusive, such as the methyl, ethyl, propyl and 3,3,3-trifluoropropyl groups, and aryl groups, such as xylyl, tolyl and phenol.

3. Use according to either of the preceding claims, in which the polyorganosiloxane resin (D) is chosen from the group consisting of vinylated polyorganosiloxane resins of following formulae (IV) to (VI) :

   $MM^{Vi}Q$ (IV), $MD^{Vi}Q$ (V) and $MM^{Vi}DD^{Vi}Q$ (VI)
   with:

   - M = siloxyl unit of formula $R_3SiO_{1/2}$
   - $M^{Vi}$ = siloxyl unit of formula $(R_2)(vinyl)SiO_{1/2}$
   - D = siloxyl unit of formula $R_2SiO_{2/2}$
   - $D^{Vi}$ = siloxyl unit of formula $(R)(vinyl)SiO_{2/2}$
   - Q = siloxyl unit of formula $SiO_{1/2}$; and
   - the R groups, which are identical or different, are monovalent hydrocarbon groups chosen from alkyl groups having from 1 to 8 carbon atoms inclusive, such as the methyl, ethyl, propyl and 3,3,3-trifluoropropyl groups, and aryl groups, such as xylyl, tolyl and phenyl.

4. Use according to one of the preceding claims, in which the silicone elastomer composition crosslinked by hydrosilylation comprises, before crosslinking:

   - at least one polyorganosiloxane (A) exhibiting, per molecule, at least two alkenyl groups bonded to silicon;
   - at least one polyorganosiloxane (B) exhibiting, per molecule, at least three hydrogen atoms bonded to silicon;
   - a catalytically effective amount of at least one metal catalyst (C) (preferably based on platinum);
   - at least one vinylated polyorganosiloxane resin (D) as defined according to Claim 1 or 2,
   - optionally at least one crosslinking inhibitor (E);
   - optionally at least one adhesion promoter (F);
   - optionally a polyorganosiloxane (H) unreactive by polyaddition and
   - optionally a reinforcing or nonreinforcing filler (G); other than a vinylated polyorganosiloxane resin (D).

5. Use according to one of the preceding claims, in which the silicone elastomer composition crosslinked by hydrosilylation is not transparent and comprises, before crosslinking,

   - at least one polyorganosiloxane (A) exhibiting, per molecule, at least two alkenylated groups bonded to silicon;
   - at least one polyorganosiloxane (B) exhibiting, per molecule, at least three hydrogen atoms bonded to silicon;
   - a catalytically effective amount of at least one metal catalyst (C) (preferably based on platinum);
   - at least one vinylated polyorganosiloxane resin (D) as defined according to Claim 1 or 2;
   - at least one reinforcing, nonreinforcing or semireinforcing filler (G), other than a vinylated polyorganosiloxane resin (D),
   - optionally a polyorganosiloxane (H) unreactive by polyaddition,

- optionally at least one crosslinking inhibitor (E); and
- optionally at least one adhesion promoter (F).

**6.** Use according to one of the preceding claims, in which the vinylated polyorganosiloxane resin (D) is present in the silicone elastomer composition before crosslinking at up to 20%, preferably up to 15% and more preferably still between 1 and 15%, by weight, with respect to the total weight of the composition.

**7.** Use according to one of the preceding claims, in which the silicone elastomer composition crosslinked by hydrosilylation is intended for applications in the field of molding, in particular prototyping or for the molding of dental or paramedical material, or in the field of silicone gels, in particular for the protection of electronic equipment sensitive to vibrations, to impacts or to temperature, and as base medical material, in particular for the preparation of prostheses, implants or dressings.

**Patentansprüche**

**1.** Verwendung einer Silicon-Elastomer-Zusammensetzung, vernetzt durch Hydrosilylierung von mindestens einem Polyorganosiloxan-Harz **(D),** das mindestens eine Struktureinheit Si-alkenyl, vorzugsweise Si-vinyl umfasst und zu der genannten Zusammensetzung vor der Vernetzung gegeben wird, zur Herabsetzung des Vergilbens, wobei das genannte Polyorganosiloxan-Harz **(D)** umfasst:

a) mindestens eine funktionalisierte Struktureinheit Siloxyl der Formel (I)

$$Y\ R_a\ SiO_{\frac{(3-a)}{2}} \quad \textbf{(I)}$$

in der Y eine Gruppe Alkenyl mit 2 bis 12 Kohlenstoffatomen ist, vorzugsweise eine Gruppe Vinyl oder Allyl, R eine monovalente Kohlenwasserstoff-Gruppe darstellt, ausgewählt unter den Gruppen Alkyl mit einschließlich 1 bis 8 Kohlenstoffatomen, wie den Gruppen Methyl, Ethyl, Propyl und 3,3,3-Trifluorpropyl und den Gruppen Aryl wie Xylyl, Tolyl und Phenyl, und a = 0, 1 oder 2 ist,
b) mindestens eine nicht funktionalisierte Struktureinheit Siloxyl der Formel (II):

$$R_b\ SiO_{\frac{(4-b)}{2}} \quad \textbf{(II)}$$

mit R, das die gleiche Definition wie oben besitzt und b = 1, 2 oder 3 ist; und
c) mindestens einer Struktureinheit Siloxyl Q der Formel (III):

$$SiO_{\frac{4}{2}} \quad \textbf{(III)}$$

wobei das genannte Polyorganosiloxan-Harz **(D)** gegebenenfalls bis zu 2,5 Mol-% Silanolfunktionen und vorzugsweise weniger als 0,5 Mol-% Silanolfunktionen enthalten kann und die genannte Silicon-Elastomer-Zusammensetzung, die durch Hydrosilylierung vernetzt ist, gegebenenfalls einen verstärkenden Füllstoff enthalten kann, der anders ist als ein Polyorganosiloxan-Harz **(D).**

**2.** Verwendung nach Anspruch 1, bei der das vinylierte Polyorganosiloxan-Harz **(D)** ein Harz ist, das Struktureinheiten Si-Vi umfasst, und das aus der Gruppe gewählt wird, gebildet durch

- MD$^{Vi}$Q, worin die Vinylgruppen in die Struktureinheiten (D) eingeschlossen sind,
- MD$^{Vi}$TQ, worin die Vinylgruppen in die Struktureinheiten (D) eingeschlossen sind,
- MM$^{Vi}$Q, worin die Vinylgruppen in einen Teil der Struktureinheiten (M) eingeschlossen sind,
- MM$^{Vi}$TQ, worin die Vinylgruppen in einen Teil der Struktureinheitten (M) eingeschlossen sind,
- MM$^{Vi}$DD$^{Vi}$Q, worin die Vinylgruppen in die Struktureinheiten (M) und (D) eingeschlossen sind,
- und ihre Mischungen,

mit:

- M = Struktureinheit Siloxyl der Formel $R_3SiO_{1/2}$
- $M^{Vi}$ = Struktureinheit Siloxyl der Formel $(R_2)(Vinyl)SiO_1/_2$
- D = Struktureinheit Siloxyl der Formel $R_2SiO_{2/2}$
- $D^{Vi}$ = Struktureinheit Siloxyl der Formel $(R)(Vinyl)SiO_{2/2}$
- Q = Struktureinheit Siloxyl der Formel $SiO_{4/2}$
- T = Struktureinheit Siloxyl der Formel $RSiO_{3/2}$ und
- den Gruppen R, gleich oder verschieden, die monovalente Kohlenwasserstoff-Gruppen sind, ausgewählt unter den Gruppen Alkyl mit einschließlich 1 bis 8 Kohlenstoffatomen, wie den Gruppen Methyl, Ethyl, Propyl und 3,3,3-Trifluorpropyl, und den Gruppen Aryl wie Xylyl, Tolyl und Phenyl.

3. Verwendung nach einem der vorstehenden Ansprüche, bei der das Polyorganosiloxan-Harz **(D)** aus der Gruppe gewählt wird, gebildet durch die vinylierten Polyorganosiloxan-Harze der folgenden Formeln (IV) bis (VI):

$MM^{Vi}Q$ **(IV);** $MD^{Vi}Q$ **(V)** und $MM^{Vi}DD^{Vi}Q$ **(VI)**
mit:

- M = Struktureinheit Siloxyl der Formel $R_3SiO_{1/2}$
- $M^{Vi}$ = Struktureinheit Siloxyl der Formel $(R_2)(Vinyl)SiO_{1/2}$
- D = Struktureinheit Siloxyl der Formel $R_2SiO_{2/2}$
- $D^{Vi}$ = Struktureinheit Siloxyl der Formel $(R)(Vinyl)SiO_{2/2}$
- Q = Struktureinheit Siloxyl der Formel $SiO_{4/2}$ und
- den Gruppen R, gleich oder verschieden, die monovalente Kohlenwasserstoff-Gruppen sind, ausgewählt unter den Gruppen Alkyl mit einschließlich 1 bis 8 Kohlenstoffatomen, wie den Gruppen Methyl, Ethyl, Propyl und 3,3,3-Trifluorpropyl, und den Gruppen Aryl wie Xylyl, Tolyl und Phenyl.

4. Verwendung nach einem der vorstehenden Ansprüche, bei der die durch Hydrosilylierung vernetzte Silicon-Elastomer-Zusammensetzung vor der Vernetzung umfasst:

- mindestens ein Polyorganosiloxan **(A),** das pro Molekül mindestens zwei Gruppen Alkenyl aufweist, gebunden an das silicium;
- mindestens ein Polyorganosiloxan **(B),** das pro Molekül mindestens drei Wasserstoffatome aufweist, gebunden an das Silicium;
- eine katalytisch wirksame Menge von mindestens einem metallischen Katalysator **(C)** (vorzugsweise auf der Basis von Platin);
- mindestens ein vinyliertes Polyorganosiloxan-Harz **(D)** wie in Anspruch 1 oder 2 definiert;
- gegebenenfalls mindestens einen Inhibitor der Vernetzung **(E);**
- gegebenenfalls mindestens einen Haftungspromotor **(F);** gegebenenfalls ein Polyorganosiloxan **(H),** nicht reaktiv durch Polyaddition; und
- gegebenenfalls einen Füllstoff **(G),** verstärkend oder nicht verstärkend, der anders ist als ein vinyliertes Polyorganosiloxan-Harz **(D).**

5. Verwendung nach einem der vorstehenden Ansprüche, bei der die durch Hydrosilylierung vernetzte Silicon-Elastomer-Zusammensetzung nicht transparent ist und vor der Vernetzung umfasst:

- mindestens ein Polyorganosiloxan **(A),** das pro Molekül mindestens zwei Gruppen Alkenyl aufweist, gebunden an das Silicium;
- mindestens ein Polyorganosiloxan **(B),** das pro Molekül mindestens drei wasserstoffatome aufweist, gebunden an das Silicium;
- eine katalytisch wirksame Menge von mindestens einem metallischen Katalysator **(C)** (vorzugsweise auf der Basis von Platin);
- mindestens ein vinyliertes Polyorganosiloxan-Harz **(D)** wie in Anspruch 1 oder 2 definiert;
- mindestens einen Füllstoff **(G),** verstärkend, nicht verstärkend oder halbverstärkend, der anders ist als ein vinyliertes Polyorganosiloxan-Harz **(D).**
- gegebenenfalls ein Polyorganosiloxan **(H),** nicht reaktiv durch Polyaddition;
- gegebenenfalls mindestens einen Inhibitor der Vernetzung **(E);** und
- gegebenenfalls mindestens einen Haftungspromotor **(F).**

6. Verwendung nach einem der vorstehenden Ansprüche, bei der das vinylierte Polyorganosiloxan-Harz **(D)** in der Silicon-Elastomer-Zusammensetzung bis zu 20 Gew.-%, vorzugsweise bis zu 15 Gew.-% und noch mehr bevorzugt zwischen 1 und 15 Gew.-% anwesend ist, bezogen auf das Gesamtgewicht der Zusammensetzung.

7. Verwendung nach einem der vorstehenden Ansprüche, bei der die durch Hydrosilylierung vernetzte Silicon-Elastomer-Zusammensetzung vorgesehen ist für Anwendungen auf dem Gebiet des Formgießens, insbesondere zur Herstellung von Prototypen, oder für das Formgießen von Dental-Materialien oder para-medizinischen Materialien, oder auf dem Gebiet der Silicon-Gele, insbesondere für den Schutz von elektronischen Materialien, die gegenüber Vibrationen, Stößen und Temperaturen empfindlich sind, und als medizinisches Basismaterial für die Herstellung von Prothesen, Implantaten oder Verbänden (Pflastern).

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2775481 A
- FR 2732976 A
- FR 2848215 A
- US 2676182 A
- US 3159601 B
- US 3159602 B
- US 3220972 B
- EP 0057459 A
- EP 0188978 A
- EP 0190530 A
- US 3419593 B
- US 3715334 B
- US 3377432 B
- US 3814730 B
- US 2823218 B
- US 3723497 B
- US 3775452 B
- US 4256870 A
- US 4476166 A
- US 4347346 A
- US 3989866 A
- US 4336364 A
- US 3445420 A
- FR 1126884 A
- FR 1136885 A
- FR 1236505 A
- GB 1024234 A
- WO 9858997 A